# EUROPÄISCHE PATENTSCHRIFT

(11) **EP 1 847 005 B1**
(45) Veröffentlichungstag und Bekanntmachung des Hinweises auf die Patenterteilung: **04.07.2012**
(21) Anmeldenummer: 06707806.3
(22) Anmeldetag: 24.01.2006
(51) Int. Cl.: H02K 1/16

(54) **ELEKTRISCHE MASCHINE MIT NUTEN**
ELECTRIC MACHINE WITH GROOVES
MACHINE ELECTRIQUE A ENCOCHES

(30) Priorität: 07.02.2005 DE 102005005602
(43) Veröffentlichungstag der Anmeldung: 24.10.2007
(73) Patentinhaber: SIEMENS AKTIENGESELLSCHAFT, 80333 München (DE)
(72) Erfinder: GRABNER, Christian, 91056 Erlangen (DE)
(86) Internationale Anmeldenummer: PCT/EP2006/050386
(87) Internationale Veröffentlichungsnummer: WO 2006/082148

(56) Entgegenhaltungen:
- EP-A- 1 404 002
- FR-A- 1 471 039
- GB-A- 887 047
- US-A- 2 830 209
- US-A- 4 864 177
- US-A1- 2004 130 232
- US-B1- 6 787 958

## Beschreibung

Die Erfindung betrifft eine elektrische Maschine mit einem aus Blechen aufgebauten Stator, wobei die Bleche Nuten aufweisen, die derart ausgerichtet sind, dass ein Wicklungssystem untergebracht werden kann.

Bei klassischen Nuten, insbesondere von permanenterregten Synchronmaschinen wie z.B. in dem Fachartikel von "Analysis of Flux Distribution and Core Losses" dargestellt, ergeben sich lokale magnetische Sättigungserscheinungen an scharfen Kanten entlang einer Kontur des Blechschnittes des Stators bei einer Drehfeldmaschine. Diese Nutform der bisherigen Drehfeldmaschinen stellt einen Polygonzug dar, der im Wesentlichen eine rechteckförmige oder trapezförmige Grundfläche aufweist. Damit ergeben sich zusätzliche Eisenverluste.

So zeigt die US 2004/130232 A1 in der Figur 4 Nuten die eine durch einen Polygonzug gebildete Querschnittsform aufweisen. Die Berandungen der Nuten sind stückweise gerade und bilden auf der radial außenliegenden Seite einen stumpfen Winkel, damit der Stator eine größere Öffnung für den Rotor aufweist.

Die US-A-2 830 209 zeigt in den Figuren verschiedene Nutformen, die einem entarteten Rechteck bzw. Dreieck entsprechen. Die unterschiedliche Wahl der Nutenform wird gewählt, um am Blechpaket des Stators zwei gegenüber liegende abgeflachte Seiten ausbilden zu können.

Die GB 887 047 A zeigt in den Figuren Nuten die jeweils zwei lange Seitenflanken aufweisen, die die Gestalt einer Geraden haben. Diese beiden Flanken sind über halbkreisförmige Seitenwände miteinander verbunden. Die radiale Erstreckung der Nuten in den Ecken des Stator-Blechpakets ist größer als die der restlichen Nuten. Die Zähne zwischen den Nuten in den Ecken des Blechpaketes haben eine geringere Breite als die restlichen Zähne. Dies ermöglicht eine größere durchschnittliche Zahnbreite und damit einen größeren magnetischen Hauptfluss.

Die US-A-4 864 177 beschreibt eine Blechpaket, das eine elliptische Form aufweist, wobei der Abstand der Nuten voneinander an der kleineren Achse des Blechpakets größer ist als an der großen Achse des Stator-Blechpakets. Damit soll der Materialbedarf reduziert werden, wobei immer noch die gewünschten elektromagnetischen Eigenschaften des Motors erreicht werden. Den Figuren kann man entnehmen, dass die Nuten zwei lange Seitenflanken aufweisen, die die Gestalt einer Geraden haben. Diese beiden Flanken sind über halbkreisförmige Seitenwände miteinander verbunden.

Die US-B1-6 787 958 beschreibt Nuten der Ankerwicklung, die in radialer Richtung eine größere Erstreckung haben als die Nuten der Feldwicklung, so dass der magnetische Rückschluss der Ankerwicklung eine größere Dicke hat als der der Feldwicklung. Eine derartige Anordnung optimiert die Leistungseffizienz. Den Figuren 6, 7, 8 entnimmt man in Form von Blasen skizzenhaft wiedergegebene Nuten. Der Figur 9 und der Figur 10 entnimmt man Nuten mit einem durch einen Polygonzug gebildete Querschnittsform, die Ecken aufweist.

Die FR-A-1 471 039 offenbart in der Figur 6 eine Anordnung von drei Nuten je Ausnehmung. Die Nuten weisen eine ihrer jeweiligen Relativlage zu den durch die Ausnehmungen gebildeten Kühlkanälen sowie zu deren Konturen derart angepasste Querschnittsform auf, dass alle den einzelnen Nuten zugeordneten kleinsten Jochhöhen zumindest näherungsweise gleich groß sind. Dadurch wir eine annähernd gleichmäßige magnetische Belastung der Joche erreicht und das durch die Kühlkanäle für das aktive Material verlorengehende Volumen ist minimal. Der Figur 5 der FR-A-1 471 039 kann man entnehmen, dass die Nuten jeweils zwei lange Seitenflanken aufweisen, die die Gestalt einer Geraden haben. Diese beiden Flanken sind über halbkreisförmige Seitenwände miteinander verbunden.

Ausgehend davon liegt der Erfindung die Aufgabe zugrunde, bei einer elektrischen Drehfeldmaschine, insbesondere einer permanenterregten Synchronmaschine die Eisenverluste aufgrund lokaler magnetischer Sättigungserscheinungen zu vermeiden.

Die Lösung der gestellten Aufgabe gelingt durch eine elektrische Maschine mit den Merkmalen des Anspruchs 1.

Damit tritt eine Homogenisierung des magnetischen Feldes und eine damit verbundene Verlustminderung ein.

Die Nuten sind elliptisch geformt. Dadurch werden die negativen Effekte einer magnetischen ausgeprägten Sättigung des Materials in den Kanten eliminiert. Andererseits wird bei elektrischen Maschinen insbesondere mit Zahnspulenwicklungen, vergleichsweise kleinen Nutzahlen des Stators und ausgeprägten Polschuhbereichen der gesamte Verlauf des magnetischen Feldes über die weiten Bereiche des Luftspalts und der magnetisch annähernd wie Luft wirksamen Isolierung sowie der Kupferbereiche eine verbesserte Verteilung dieses magnetischen Feldes aufweisen, da die negativen Einflüsse der starken Kanten im magnetischen Kreis vermieden werden.

Es ergibt sich zwar gegenüber einem Rechteck ein verminderter Querschnittsbereich der Nut um den Faktor n, bei der z.B. eingesetzten Zahnspulentechnik ist dies aber nicht störend, da ohnehin bei der vergleichsweise geringen Nutzahl, z.B. sechs, neun oder zwölf des Stators und entsprechend großen Durchmesser der elektrischen Maschine ausreichend Platz vorhanden ist. Es überwiegt bei der Zahnspulentechnik der positive Einfluss der Homogenisierung des Magnetfeldes in Folge der elliptischen Randformen im Bereich der einzelnen Nuten mehr als bei Typen mit einer vergleichsweise hohen Statornutzahl.

Es werden insbesondere in den Zahnköpfen, d.h. in dem Bereich des Luftspaltes die unerwünschte Flussdichte der Amplituden vermieden, so dass es dort zu weniger lokalen Oberflächenverlustdichten kommt.

Die Erfindung sowie weitere vorteilhafte Ausgestaltungen der Erfindung gemäß der Unteransprüche werden anhand schematisch dargestellter Ausführungsbeispiele näher erläutert. Darin zeigen:

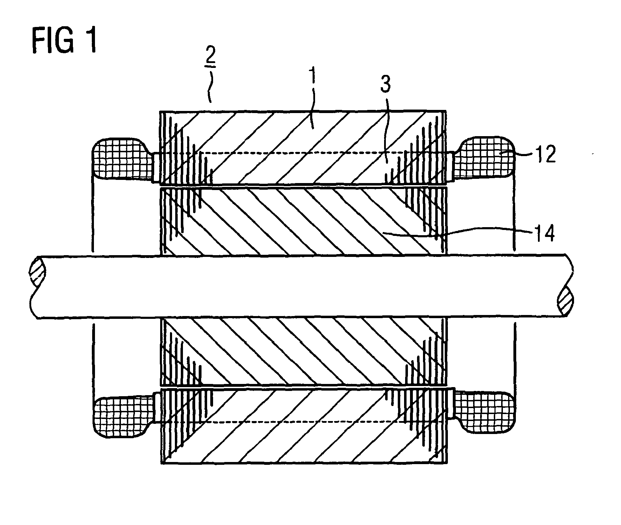

FIG 1 Prinzipdarstellung einer elektrischen Maschine,

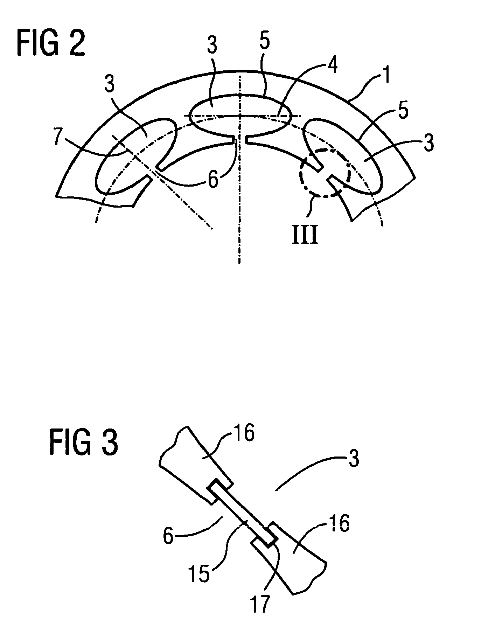

FIG 2 Blechschnitt eines Blechs,
FIG 3 Detaildarstellung eines Nutschlitzes

FIG 1 zeigt den prinzipiellen Aufbau einer nicht näher dargestellten elektrischen Maschine mit einem aus geschichteten Blechen 1 gebildeten Stator 2. Der schematisch dargestellte Läufer 14 ist mit Permanentmagneten versehen, die entweder im Blechpaket des Läufers 14 in axial verlaufenden Ausnehmungen angeordnet sind, oder auf der Oberfläche des Läufer 14 positioniert und durch eine Bandage gesichert sind.

Die Bleche 1 des Stators 2 gemäß FIG 2 zeigen Nuten 3, die ellipsenförmigen ausgeführt sind und im Wesentlichen axial verlaufen. Dabei ist die Längsachse 4 der Ellipse 5 parallel zu einer gedachten Tangente 13 an den zu dieser Nut 3 korrespondierenden Luftspalt ausgerichtet. Die Querachse 7 der Ellipse 5 ist senkrecht zu dieser gedachten Tangente 13 ausgerichtet. Die Längs- 4 und die Querachse 7 bilden die Symmetrieachsen der Ellipse 5.

Vorteilhafterweise weisen die Nutschlitze 6 der ellipsenförmigen Nuten 3 eine über die axiale Länge des Stators 2 verlaufende Schrägung auf. Sie dient der Reduzierung der Rastmomente. Diese Schrägung liegt vorteilhafterweise zwischen einer halben und zwei Nutteilungen.

Unabhängig von der Ausführungsform werden damit lokale Oberflächenverlustdichten des ferromagnetischen Materials des Blechs 1 im Betrieb der elektrischen Maschine vermindert.

Die in den Nuten 3 vorgesehenen Wicklungssysteme 12 sind gesehnte Wicklungen oder Zahnspulen. Nach Einsetzen der Wicklungssysteme 12 z.B. durch an sich bekannte Nadelwickler in die Nuten 3, werden die Wicklungen vergossen und gegebenenfalls die Nutschlitze 6, die sich zwischen zwei Zahnköpfen 16 gemäß FIG 3 ergeben durch geeignete Materialien gefüllt bzw. geschlossen. Diese Nutverschlusselemente 15 sind amagnetisch oder magnetisch ausgeführt und werden vorteilhafterweise in axial verlaufenden Ausnehmungen 17 der Zahnköpfe 16 positioniert.

## Patentansprüche

1. Elektrische Maschine mit einem aus geschichteten Blechen (1) aufgebauten Stator (2), wobei die Bleche (1) Nuten (3) aufweisen, die derart ausgerichtet sind, dass ein Wicklungssystem (12) untergebracht werden kann, **dadurch gekennzeichnet, dass** jede Nut (3) zueinander senkrechte unterschiedlich lange Symmetrieachsen, die als Längs-(4) und Querachse bezeichnet werden, aufweist, die Nuten (3) elliptisch geformt sind und die Längsachse (4) der Ellipse (5) parallel zu einer gedachten Tangente an den zur jeweiligen Nut (3) korrespondierenden Luftspalt ausgerichtet ist.

2. Elektrische Maschine nach Anspruch 1, **dadurch gekennzeichnet, dass** der Stator (2) vier-, sechs- oder achtpolig ausgeführt ist.

3. Elektrische Maschine nach einem der vorhergehenden Ansprüche, **dadurch gekennzeichnet, dass** das Wicklungssystem (12) aus Zahnspulen oder gesehnten Spulen aufgebaut ist.

4. Elektrische Maschine nach einem der vorhergehenden Ansprüche, **dadurch gekennzeichnet, dass** der Stator (2) eine Nutschlitzfüllung (17) aufweist.

## Claims

1. Electrical machine having a stator (2) formed from layers of laminates (1), with the laminates (1) having slots (3) which are aligned such that a winding system (12) can be accommodated, **characterized in that** each slot (3) has axes of symmetry which are at right angles to one another, are of different lengths and are referred to as the longitudinal axis (4) and the lateral axis, the slots (3) are shaped elliptically, and the longitudinal axes (4) of the ellipse (5) is aligned parallel to an imaginary tangent to the air gap which corresponds to the respective slot (3).

2. Electrical machine according to Claim 1, **characterized in that** the stator (2) has four, six or eight poles.

3. Electrical machine according to one of the preceding claims, **characterized in that** the winding system (12) is formed from toothed coils or fractional-pitch coils.

4. Electrical machine according to one of the preceding claims, **characterized in that** the stator (2) has slot mouth filling (17).

## Revendications

1. Machine électrique ayant un stator ( 2 ) constitué de tôles feuilletées, les tôles ( 1 ) ayant des encoches ( 3 ) qui sont dirigées de manière à ce qu'un système ( 12 ) d'enroulement puisse être logé, **caractérisée en ce que** chaque encoche ( 3 ) a des axes de symétrie de longueur différente perpendiculaires entre eux qui sont désignés par axe ( 4 ) longitudinal et par axe transversal, les encoches ( 3 ) sont de forme elliptique et l'axe ( 4 ) longitudinal de l'ellipse ( 5 ) est dirigé parallèlement à une tangente imaginaire à l'entrefer correspondant à l'encoche ( 3 ) respective.

2. Machine électrique suivant la revendication 1, **caractérisée en ce que** le stator ( 2 ) est quadripolaire, exapolaire ou octopolaire.

3. Machine électrique suivant l'une des revendications précédentes, **caractérisée en ce que** le système ( 12 ) d'enroulement est formé de bobines dentées ou de bobines polygonales.

4. Machine électrique suivant l'une des revendications précédentes, **caractérisée en ce que** le stator ( 2 ) a un remplissage ( 17 ) de fente d'encoche.
